# FASCICULE DE BREVET EUROPEEN

(11) **EP 0 466 991 B1**
(45) Date de publication et mention de la délivrance du brevet: **15.10.1997**
(21) Numéro de dépôt: 90402038.5
(22) Date de dépôt: 16.07.1990
(51) Int. Cl.: B60V 1/00, B60V 1/14, B63B 1/38

(54) **Bateau à déjaugeage partiel et propulseurs immergés**
Rumpfschiff mit eingeschlossener Luftblase und Unterwasserpropeller
Capture-air-bubble vessel and immersed propulsion unit

(43) Date de publication de la demande: 22.01.1992
(73) Titulaire: HYDRAPLUS, F-76000 Rouen (FR)
(72) Inventeur: Vallon, Roger, F-76000 Rouen (FR)
(74) Mandataire: Leboyer, Jean-Jacques

(56) Documents cités:
- FR-A- 2 044 278
- FR-A- 2 099 655
- US-A- 3 141 436
- US-A- 3 472 193
- US-A- 3 473 503
- US-A- 3 545 397
- US-A- 3 837 314

## Description

La présente invention concerne un bateau apte à se déplacer à grande vitesse au-dessus du niveau de l'eau, après déjaugeage. Elle concerne plus particulièrement un bateau de ce type, destiné au transport de passagers, de véhicules ou de charges inertes sur des eaux relativement calmes, par exemple sur des rivières, fleuves, canaux ou lacs.

Les inconvénients que présentent les bateaux légers ou de moyen tonnage assurant le transport des personnes ou des véhicules sont connus : ce sont principalement la lenteur des déplacements et la lenteur et l'obligation d'anticipation soigneuse des manoeuvres d'accostage ou d'évitement, ainsi que l'importance excessive des masses inertes par rapport aux charges utiles transportées, et la formation d'un sillage important générateur de risques et de nuisances par les remous qu'il occasionne.

On connaît déjà des navires à effet de surface conçus sur le principe du soufflage d'air sous pression dans un ou plusieurs volumes, aux parois rigides ou souples, aménagés sous leur coque. Le coussin d'air formé peut produire, dans le cas extrême des aéroglisseurs et à condition que les jupes souples placées sous la coque puissent résister à une forte pression d'air, un déjaugeage complet du bateau. Pour une plus faible pression de l'air insufflé sous la coque, dans une sorte de coussin d'air, il n'y a pas ou seulement partiellement déjaugeage et les véhicules marins ainsi réalisés, le plus souvent pour des usages militaires, sont amphibies et peuvent circuler sur l'eau, les marais et les rivages. Un tel coussin d'air assurant le déjaugeage du bateau permet, en annulant presque la traînée de celui-ci dans l'eau, d'accroître très sensiblement la vitesse. Mais la propulsion du bateau est alors traditionnellement assurée par des moteurs et des hélices d'avion, l'un et l'autre aériens, donc générateurs d'importantes nuisances.

On connaît par ailleurs des engins flottants, dénommés hydroptères ou hydrofoils, dont le déjaugeage total ou partiel est assuré à partir d'une certaine vitesse par des ailerons portants reliés à la coque par des bras. Ces ailerons constituent des plans porteurs inclinables qui, en s'appuyant sur l'eau, provoquent une poussée verticale assurant le déjaugeage du bateau à partir d'une vitesse donnée.

Le document US-A-3 141 436 décrit un bateau sur coussin d'air, assisté par hydrofoils et agencé pour constituer un véhicule amphibie. Ce bateau de conception complexe nécessite un gouvernail, a de préférence la structure d'un trimaran complété par des volets avant et arrière sous coque, et est tout spécialement conçu pour la négociation de la boule à grande vitesse, après avoir été lancé sans déjaugeage.

Le document US-A-3 837 314 décrit des modes de réalisation de véhicules supportés par un coussin de fluide, comportant un agencement particulier des éléments flexibles périphériques qui retiennent le coussin de fluide et propulsé par des réacteurs immergés, fixés aux parois latérales. Ces véhicules nécessitent par ailleurs des organes de commande d'orientation et des organes stabilisateurs ayant un profil défini.

Ces deux systèmes par lesquels on a cherché jusqu'ici à éliminer ou réduire les inconvénients des bateaux classiques, à savoir la sustentation sur coussin d'air ou le déjaugeage, visent à réduire la traînée du bateau et donc à permettre d'augmenter la vitesse pour une puissance motrice donnée ou de réduire la puissance nécessaire pour une vitesse fixée.

Mais, comme on l'a mentionné plus haut, la propulsion du bateau sur coussin d'air est jusqu'à maintenant assurée par des hélices aériennes ou des moteurs à réaction aériens, provoquant d'importantes nuisances.

Quant à la technique de l'hydroptère, mettant en oeuvre des groupes propulseurs immergés et un déjaugeage partiel, elle permet certes une nette amélioration de la maniabilité de l' engin flottant ainsi conçu, mais on s'est heurté à des difficultés quasi-insurmontables, en particulier pour les bateaux de grande dimension et/ou de fort tonnage, lorsqu'on a voulu demander à ces mêmes groupes propulseurs immergés d'assurer aussi, grâce à des volets, le déjaugeage de l'engin flottant.

On a maintenant trouvé de façon inattendue que l'on peut remédier à ces inconvénients et disposer d'un bateau particulièrement sûr, rapide, maniable et à nuisances réduites, en combinant sur un même bateau un système générateur d'une lame d'air en surpression sous la coque, assurant un déjaugeage partiel du bateau, et un système propulseur composé d'au moins trois groupes moteur électrique-hélice immergés indépendants, convenablement répartis et fixés par des bras sensiblement à la verticale du bateau en flottaison, sous la coque de celui-ci.

L'invention a donc pour premier objet un bateau, tel qu'un navire, une barge motorisée, une péniche ou autres engins flottants, selon les termes de la revendication 1.

La production d'une lame d'air sous coque peut être réalisée par une combinaison de moyens classiques, connus de l'homme du métier. Ce système permet d'obtenir le déjaugeage indépendamment de la vitesse de déplacement, dans d'excellentes conditions techniques et économiques. La lame d'air qui doit être interposée entre l'eau et la coque peut par exemple être obtenue grâce à des ventilateurs centrifuges, dont la puissance est calculée en fonction de la pression qui doit équilibrer le tirant d'eau du bateau au repos de façon à exercer une surpression d'air dans au moins un compartiment délimité pour ce faire sous la coque par des cloisons rigides et/ou souples.

La propulsion par trois groupes indépendants ou plus, associant chacun moteur électrique et hélice, est une solution souple et économique.

S'agissant de moteurs électriques, ceux-ci peuvent être alimentés en courant continu ou aternatif, en moyenne tension, par un groupe Diesel de puissance adaptée. Une batterie d'accumulateurs de puissance appropriée peut servir d'appoint pour les faibles déplacements et pour faire face à d'éventuelles pannes de courte durée du groupe Diesel.

Selon une variante avantageuse l'invention a également pour objet un bateau tel que susdit, dans lequel une fraction ou la totalité de la partie basse des parois de la coque ou des jupes entourant le bateau est pourvue, dans sa partie demeurant immergée mais au dessus du niveau de l'eau sous la coque du bateau en déjaugeage partiel, de trous-évents, de faible diamètre, pour laisser échapper de l' air sous légère pression provenant de la lame d'air sous coque et ainsi former des bulles qui montent le long des flancs du bateau.

On a en effet trouvé que l'on peut par cette variante encore améliorer la réduction de la traînée du bateau déjà obtenue par l' interposition d'une lame d'air entre l'eau et la partie inférieure de la coque, en l'étendant ainsi pratiquement à l'ensemble de la coque immergée. Il se forme en effet au débouché de ces trous-évents sur l'extérieur de la coque une émulsion mobile entre l' eau et des bulles d'air, constituant une sorte de peau émulsionnée labile lubrifiant les parois immergées et réduisant ainsi encore sensiblement la puissance appelée pour une vitesse donnée, y compris en tenant compte de la consommation d'énergie des ventilateurs assurant le soufflage de l'air.

Selon une autre variante encore, qui peut être combinée avec la précédente, le bateau selon l'invention est également muni d'ailerons ou foils fixes, disposés de manière à pouvoir s'appuyer sur la surface de l'eau située sous la lame d'air présente sous la coque en position de déjaugeage, contribuant ainsi au maintien ou à l'amélioration du déjaugeage. Avantageusement on peut, pour ce faire, tirer profit de la présence et de la structure de jambes-supports assurant la fixation des groupes moteur-hélices et placer les foils sensiblement fixes sur ces jambes-supports fixées à la coque. A titre de variante supplémentaire, le groupe moteur-hélice peut aussi être muni d'ailerons ou foils fixés sur le groupe moteur lui-même, en aval de l'hélice, contribuant ainsi au déjaugeage et en toute logique aussi au rendement des hélices.

L'invention est décrite plus en détail ci-après en référence aux planches de dessins annexées, qui ne la limitent aucunement et dans lesquelles :

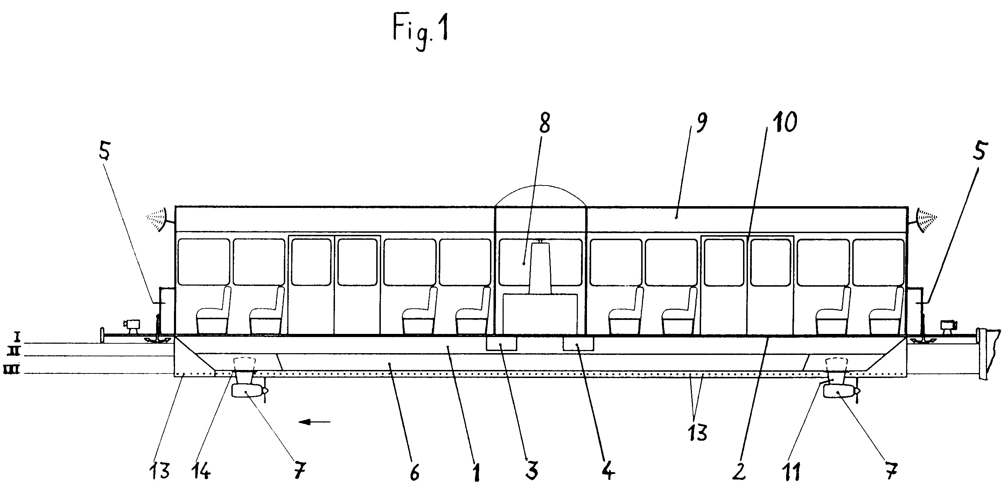

La figure 1 représente une vue schématique en coupe longitudinale d'un bateau selon l'invention équipé pour le transport de passagers ;

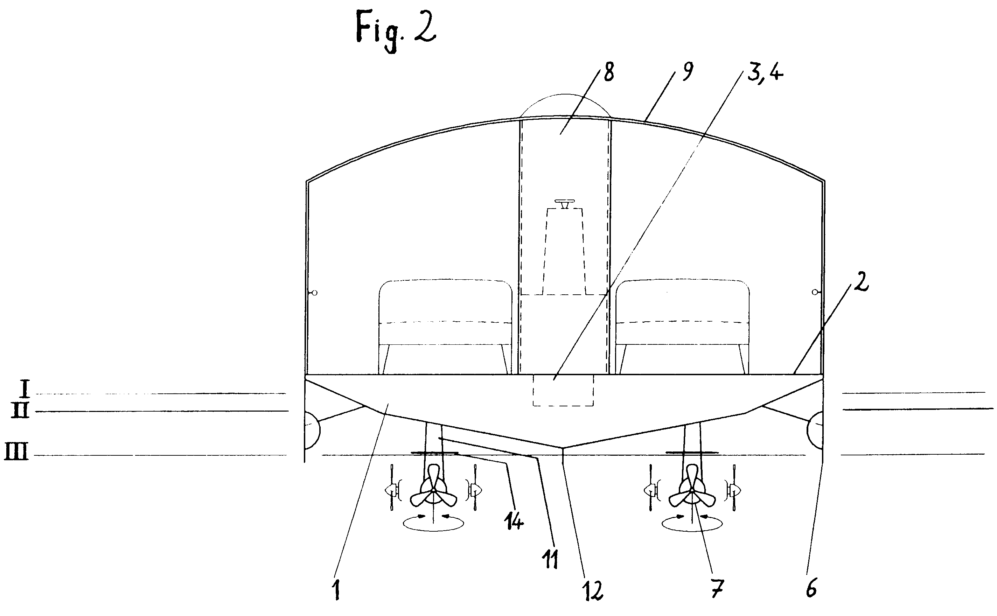

la figure 2 représente une vue schématique en coupe transversale médiane du même bateau.

Le bateau le plus approprié pour la mise en oeuvre des moyens d'amélioration de la navigation selon l'invention comporte une coque 1 légère, quasi-plane et sans quille, un pont plan 2 proche du niveau de l'eau, un groupe Diesel 3 alimentant une batterie d'accumulateurs 4, des ventilateurs centrifuges 5, des cloisons rigides et/ou des jupes souples 6 et des groupes moteur-hélice 7, ainsi qu'un poste de pilotage, avantageusement automatisé, 8.

Selon qu'il est destiné au transport de personnes, de véhicules ou de charges inertes, le bateau peut en outre comporter respectivement, en option, un habitacle fermé 9 et des portes d'accès 10, des plans frontaux d'embarquement pour véhicules et des moyens classiques de chargement-déchargement et de confinement des charges mixtes.

Les moteurs électriques 7 sont de préférence suspendus sous la coque, grâce à des jambes-supports 11 (avantageusement en forme de fûts tronconiques), de telle sorte que les groupes moteur-hélices restent immergés lorsque le bateau est déjaugé. Ces moteurs sont fixés à l'extrémité de ces jambes-supports de façon à être mobiles en rotation et pouvoir pivoter instantanément dans toutes les directions, donc à 360°, par exemple grâce à des vérins électriques appropriés, placés dans la coque étanche. Cela permet la réalisation, dans un temps très court et avec le maximum d'efficacité, de toutes les manoeuvres de démarrage, d'approche et d'évitement, et ce même à pleine puissance.

Un câblage électrique reliant la source d'énergie électrique au moteur sur l'arbre duquel est directement fixée l'hélice remplace les arbres des hélices classiques. L'étanchéité ne pose alors aucun problème et se trouve ramenée à une isolation électrique simple.

En variante on peut également arrimer le moteur de chaque groupe moteur-hélice sous ou dans la coque et assurer une jonction fonctionnelle appropriée entre ce moteur et l'hélice, elle-même fixée comme susdit à l'extrémité d'une jambe-support.

Dans la pratique le groupe Diesel alternateur pour la production de l'énergie électrique utile et la charge des accumulateurs de dépannage est placé sous le pont, près du poste de pilotage 8. Celui-ci est structuré comme un poste électrique, contrôlé par un automate. Le bateau n'a pas besoin de gouvernail. Sa vitesse peut atteindre 100 km/h et se trouve limitée en pratique plus par des exigences de sécurité que par des contraintes techniques.

Un système de jupes souples ou rigides 6 et de cloisons fixes 12 réalise l'étanchéité du volume d'air qui, sous une légère pression, assure le déjaugeage et le maintien au-dessus de l'eau sous coque de l'ensemble coque-cloisons-jupes. Des ventilateurs de faible puissance, avantageusement centrifuges non bruyants, à vitesse variable, fournissent cette légère surpression d'air, qui est contrôlée électroniquement, afin d'établir dans le volume de sustentation l'exacte pression nécessaire. Ce volume est préférentiellement découpé en au moins quatre sous-volumes (bâbord, tribord, avant et arrière), de telle sorte que l'on puisse compenser les différences de charges et assurer en temps réel l'horizontalité du plancher.

Le bateau ainsi conçu peut être à fond plat. Les superstructures sont de faible hauteur et il peut ne pas y avoir de mât. Il peut transporter des passagers, des véhicules ou des charges inertes ou être mixte. L'embarquement et le débarquement des passagers se fait latéralement, des deux côtés. L'embarquement des véhicules peut se faire frontalement, par l'avant ou l'arrière ; en fait cependant il n'y a pas à proprement parler d'avant et d'arrière sur un tel bateau, qui est parfaitement symétrique.

Sur les figures annexées les traits référencés I, II et III respectivement représentent le niveau de l'eau pour un bateau non-déjaugé, le niveau de l'eau sur l'extérieur de la coque en position de déjaugeage partiel, et le niveau de l'eau sous la coque en déjaugeage partiel.

Le bateau peut avoir un ou deux niveaux, selon le tirant d'air disponible. Il peut aussi être équipé pour le transport de camions et de remorques et peut également, sous certaines conditions, transporter du vrac.

Destiné à naviguer sur rivières, canaux et lacs, le bateau selon l'invention ne nécessite pas de jupes renforcées pour résister aux vagues ; les ruptures d'étanchéité du volume de sustentation ne sont pas à craindre.

Du fait du déjaugeage partiel, les remous du sillage et l'érosion des berges sont sensiblement réduits.

Le bateau une fois déjaugé après entrée en action des moyens indiqués plus haut est mis en mouvement par les groupes moteur-hélice électriques immergés, fonctionnant à vitesse variable contrôlée indépendamment pour chaque moteur et tous orientables instantanément et à 360°. L'assiette du plancher du bateau est assurée et contrôlée par un automate commandant le débit des ventilateurs de sustentation, de manière à faire varier la pression d'air dans chaque compartiment en fonction des informations reçues, par des moyens appropriés, sur l'épaisseur des différentes lames d'air. Le bateau n'ayant ni quille, ni gouvernail, la vitesse, la direction et toutes les manoeuvres d'accostage et d'évitement en sont contrôlées et assurées par un automate central, placé de préférence au poste de pilotage.

Dans la variante comportant des trous-évents 13 tels que décrits plus haut, t'est en ajustant convenablement le débit de ces mêmes ventilateurs assurant le déjaugeage partiel sur lame d'air que l'on obtient la création du rideau de bulles s'échappant par les trous-évents. Ces trous sont d'un faible diamètre approprié pour laisser passer, sous faible pression, la quantité d'air juste utile pour cette lubrification particulière des parois immergées. le débit et la pression de l'air insufflé sont ajustés par une régulation et un pilotage appropriés des fréquences des moteurs électriques de ces ventilateurs.

La réduction importante de la friction entre la coque et l'eau entraîne une diminution de l'entraînement de l'eau dans le sens de la marche du bateau, ce qui réduit dans une certaine proportion l'importance du sillage et permet d'accroître la vitesse tolérée sur les canaux et les rivières sans nuire aux berges de ces cours d'eau.

Le déjaugeage peut encore être amélioré ou préservé pour une moindre dépense en énergie par la présence d'ailerons ou foils 14 tels que décrits plus haut.

L'ensemble des moteurs électriques, vérins et appareillages de sécurité (radars, moyens de guidage et d'accostage, ancrage d' alerte et autres) peut être placé sous le contrôle d'un automate, lui-même sous la surveillance d'un seul pilote qualifié. En complément, celui-ci est avantageusement relié en permanente à un poste de contrôle général disposant de moyens de secours adéquats.

Tous les équipements et aménagements susdits permettent d'organiser de façon rationnelle le volume habitable, ainsi que les entrées et sorties des passagers ou le chargement des véhicules, dans les meilleures conditions de rapidité et de sécurité. Ils peuvent être montés sur des bateaux conçus dès l'origine conformément au concept inventif général de la présente invention, ou peuvent aussi être introduits sur des bateaux existants, afin d'améliorer leur rendement.

Le rendement global du moyen de transport nautique selon l'invention est en effet particulièrement bon, car le rapport masse transportée sur masse inerte est élevé et la puissance absorbée réduite au minimum par la supppression de la traînée dans l'eau.

Ce bateau est parfaitement adapté aux transports urbains ou interurbains par voie fluviale. Il permet de constituer un réseau complémentaire des réseaux de transport terrestre traditionnels, pour toutes les agglomérations importantes arrosées par un fleuve ou une rivière ou situées au bord d'une lagune ou d'une mer calme. Il convient aussi pour tous les déplacements utilitaires ou touristiques sur tous les fleuves ou plans d'eau calme.

L'investissement unitaire est relativement faible et les aménagements d'accès sont simples et peu coûteux.

## Revendications

1. Bateau comportant un déjaugeage avec sustentation sur coussin d'air et une propulsion immergée, destiné au transport sur des eaux calmes de rivières, fleuves, canaux ou lacs, caractérisé en ce qu'il comprend, pour remplir les fonctions de sustentation et de propulsion, une combinaison de:
- des moyens (5) de production d'une lame d'air en surpression sous la coque (1) du bateau dans au moins un compartiment délimité sous la coque par des cloisons rigides et/ou souples, de façon à réaliser, indépendamment de la vitesse de déplacement du bateau, un déjaugeage partiel de celui-ci, par introduction d'une lame d'air sous la coque, mais sans déjaugeage par rapport au niveau (II) de l'eau sur l'extérieur du dit compartiment, et
- des moyens immergés, aptes à assurer simultanément la propulsion et l'orientation du bateau, composés d'au moins trois groupes moteur électrique-hélice (7) indépendants, montés sur des jambes-supports (11) fixées à la coque (1) et mobiles en rotation, lesdits groupes moteur électrique-hélice étant fixés sensiblement à la verticale du bateau en flottaison et convenablement répartis sous celui-ci.

2. Bateau selon la revendication 1, caractérisé en ce que ladite combinaison de moyens permet la réalisation des manoeuvres de démarrage, d'approche et/ou d'évitement du bateau, au moyen d'un automate central, tandis que les groupes moteur-hélice immergés fonctionnent à vitesse variable contrôlée indépendamment pour chaque moteur et sont orientables instantanément et à 360°.

3. Bateau selon la revendication 1, caractérisé en ce que ledit moteur du groupe moteur-hélice (7) est arrimé sur ou dans la coque (1).

4. Bateau selon l'une quelconque des revendications 1 à 3, caractérisé en ce que les moyens (5) de production de la lame d'air comprennent des ventilateurs centrifuges insufflant de l'air en surpression dans au moins un compartiment délimité pour ce faire sous la coque (1) par des cloisons rigides (12) et/ou des jupes souples (6).

5. Bateau selon l'une quelconque des revendications 1 à 4, caractérisé en ce qu'une fraction ou la totalité de la partie basse des parois de la coque (1) ou des jupes (6) entourant le bateau est pourvue, dans sa partie demeurant immergée mais au-dessus du niveau de l'eau sous la coque du bateau en déjaugeage partiel, de trous-évents (13) de faible diamètre, pour laisser passer de l'air sous légère pression provenant de la lame d'air sous la coque (1) et ainsi former des bulles le long des flancs du bateau.

6. Bateau selon l'une quelconque des revendications 1 à 5, caractérisé en ce qu'il est en outre muni d'ailerons ou foils sensiblement fixes (14) disposés de manière à pouvoir s'appuyer sur la surface de l'eau située sous la lame d'air présente sous la coque en position de déjaugeage partiel sur lame d'air.

7. Bateau selon la revendication 6, caractérisé en ce que les dits ailerons ou foils (14) sont placés sur les jambes-supports (11) fixées sous la coque (1) et comportant chacune un groupe moteur-hélice (7).

8. Bateau selon la revendication 1, caractérisé en ce que l'énergie électrique utile est produite par un groupe Diesel (3) alternateur mettant également en charge des accumulateurs de dépannage.

## Claims

1. A capture-air-bubble suupported vessel with immersed propulsion unit, useful for carriage on the quiet water of rivers, waterways, channels or lakes, characterized in that it comprises, for serving in the capacity of lift and propulsion, a combination of:
- means (5) for producing an overpressurized air-sheet situated under the hull (1) of the vessel in at least one compartment delimited under the hull by rigid or flexible bulkheads, so as to accomplish, independently of the displacement speed of the vessel, a partial sue up effect of the same, by introduction of an air sheet under the hull, however without a sue up effect with regard to the water level (II) outside the said compartment, and
- immersed means, suitable for simultaneously exercising the propulsion and the orientation of the vessel, said means comprising at least three independent electric motor-propeller groups (7), mounted onto carrying legs (11) affixed to the hull (1) and rotatively movable, the said electric motor-propeller groups being affixed substantially straight up under the floating vessel and appropriately distributed under the said vessel.

2. The vessel according to claim 1, characterized in that the said combination of means makes it possible for the vessel to cast off, approach and make an evasive action, through a central automaton, whereas the immersed motor-propeller groups run at a variable speed, controlled independently for each motor and are instantaneously rotatable by 360°.

3. The vessel according to claim 1, characterized in that the said motor of the motor-propeller group (7) is affixed onto or within the hull (7).

4. The vessel according to anyone of claims 1 to 3, characterized in that the means (5) for producing the air sheet comprises centrifugal fans blowing overpressurized air into at least one compartment delimited therefor under the hull (1) by rigid bulkheads (12) and/or flexible sidewalls (6).

5. The vessel according to anyone of claims 1 to 4, characterized in that part or the totality of the lower portion of the walls of the hull (1) or of the sidewalls (6) surrounding the vessel is provided, in its section which remains immersed, however over the water level under the hull of the partially sued up vessel, with vent-holes (13) having a small diameter, so as to let lightly pressurized air, which comes from the air sheet under the hull (1) pass through and thus form bubbles along the sidewalls of the vessel.

6. The vessel according to anyone of claims 1 to 5, characterized in that it further comprises substantially fixed foils (14), which are arranged so as to be able to lean on the water surface situated under the air sheet existing under the hull in the presence of a partial sue up action on the air sheet.

7. The vessel according to claim 6, characterized in that the said foils (14) are located on the support legs (11) which are affixed under the hull (1) and each of which comprises a motor-propeller group (7).

8. The vessel according to claim 1, characterized in that the useful electric energy is produced by a Diesel group (3) alternator which also charges breakdown accumulators.

## Patentansprüche

1. Über das Wasser hochkommendes Rumpfschiff mit eingeschlossener Luftblase und Unterwasserpropeller, für die Beförderung auf ruhiges Wasser von Flüsse, Kanäle oder Seen, dadurch gekennzeichnet, dass es, um die Funktionen des Auftriebs und des Antriebs auszuüben, eine Kombination von:
- Mitteln (5) für die Erzeugung einer unter Überdruck gesetzter Luftschicht unter dem Schiffrumpf (1) in mindestens einem Raum, das unter dem Rumpfen durch starre und/oder flexible Wände begrenzt ist, um einen teiligen Auftrieb des Schiffes zuverwirklichen, unabhängig von der Geschwindigkeit des Schiffes, durch Einführung einer Luftschicht unter den Rumpf, indes ohne Auftrieb über das Wasserniveau (II) ausserhalb des genanntes Raumes, und
- überfluteten Mitteln, die sich gleichzeitige für den Antrieb und die Ausrichtung des Schiffes eignen, die aus mindestens drei unabhängigen Elektromotor-Propeller Gruppen (7), die rotationsfähig auf an dem Rumpf (1) befestigte Trägerbeine (11) aufgestellt werden, bestehen, während die genannte Elektromotor-Propeller Gruppen etwa senkrecht zum reibendem Schiff befestigt sind und richtig unter diesem verteilt sind, enthält.

2. Schiff nach Anspruch 1, dadurch gekennzeichnet, dass die genannte Kombination von Mitteln die Durchführung der Steuern für das Anfahren, die Annäherung und/oder das Ausweichen des Schiffes, mit Hilfe von einem zentralem Automat erlaubt, während die überflutete Elektromotor-Propeller Gruppen mit wechselnder, unabhängig für jeden Motor kontrollierter Geschwindigkeit laufen und unverzüglich und zu 360° drehbar sind.

3. Schiff nach Anspruch 1, dadurch gekennzeichnet, dass der genannte Motor der Motor-Propeller Gruppe (7) auf oder in dem Rumpf (1) festgemacht wird.

4. Schiff nach irgendeinem der Ansprüche 1 bis 3, dadurch gekennzeichnet, dass die Mittel (5) für die erzeugung der Luftschicht aus zentrifugalen Gebläsen bestehen, die Luft in Überdruck in mindestens einen Raum einblasen, der dafür passend unter dem Rumpf (1) durch starren Wände (12) und/oder flexible Hemden (6) begrenzt ist.

5. Schiff nach irgendeinem der Ansprüche 1 bis 4, dadurch gekennzeichnet, dass ein Teil oder die Gesamtheit des Unterteils der Wände des Rumpfes (1 oder der das Schiff umgebenden Hemden (6) versehen wird, in seinem überflutetem Teil, indes über das Niveau des Wassers unter dem Rumpf wenn das Schiff teilweise über das Wasserniveau hochkommt, mit Abzuglöcher (13), die ein kleines Durchmesser haben, um Luft durzuchlassen, die unter geringen Druck ist und aus der Luftschicht unter den Rumpf (1) stammt, und damit Blasen längs der Seiten des Schiffes bilden.

6. Schiff nach irgendeinem der Ansprüche 1 bis 5, dadurch gekennzeichnet, dass es darüber hinaus mit deutlich festen Flossen oder Foils (14) versehen wird, die so angeordnet werden dass sie auf der Wasserfläche stützen, die unter der Luftschicht sich befindet, die unter dem teilweise über die Wasserlinie hochkommendem Rumpf existiert.

7. Schiff nach Anspruch 6, dadurch gekennzeichnet, dass die genannten Flossen oder Foils (14) auf die Trägerbeine (11) gestellt werden, die unter dem Rumpf (1) befestigt werden und die jede eine Motor-Propeller Gruppe (7) enthalten.

8. Schiff nach Anspruch 1, dadurch gekennzeichnet, dass die nutzliche elektrische Energie durch eine Diesel Gruppe erzeugt wird, die als Wechselstromgenerator für die Ladung von Pannenhilfeakkumulatoren funktioniert.
